(19) Europäisches Patentamt
European Patent Office
Office européen des brevets

(11) Publication number: 0 158 459 B1

(12) **EUROPEAN PATENT SPECIFICATION**

(45) Date of publication of patent specification: **02.11.88**

(51) Int. Cl.[4]: **C 08 L 83/07**, G 02 B 1/04

(21) Application number: **85301894.3**

(22) Date of filing: **19.03.85**

(54) **Liquid curable polyorganosiloxane compositions.**

(30) Priority: **23.03.84 US 592481**

(43) Date of publication of application:
**16.10.85 Bulletin 85/42**

(45) Publication of the grant of the patent:
**02.11.88 Bulletin 88/44**

(84) Designated Contracting States:
**DE FR GB NL**

(56) References cited:
**US-A-3 485 662**
**US-A-4 057 596**
**US-A-4 340 709**

(73) Proprietor: **DOW CORNING CORPORATION**
**3901 S. Saginaw Road**
**Midland Michigan 48640 (US)**

(72) Inventor: **Kroupa, Loretta Angela**
**605 Wanetah**
**Midland Michigan (US)**

(74) Representative: **Laredo, Jack Joseph et al**
**Elkington and Fife High Holborn House 52/54**
**High Holborn**
**London, WC1V 6SH (GB)**

**EP 0 158 459 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention relates to liquid polyorganosiloxane compositions which are curable by means of a hydrosilation reaction to yield tough elastomeric products.

Liquid compositions prepared by combining a vinyl-containing polydiorganosiloxane, an organohydrogensiloxane curing agent, a platinum-containing catalyst and, optionally, a filler are known in the art. These liquid compositions can be cured under relatively mild conditions to yield elastomeric or resinous products, depending upon the types and relative concentrations of reactants present in the initial curable composition. These curable compositions are useful in a variety of applications, including encapsulation of delicate electrical and electronic components, coating of various substrates, as pressure sensitive adhesives, and the formation of shaped articles by injection molding.

Reinforcing fillers such as fume silica have been used to improve the physical properties such as tensile strength, tear strength and modulus of cured polyorganosiloxane compositions.

The use of resinous siloxane copolymers as a replacement for reinforcing silica fillers to improve the physical properties of cured articles while retaining the transparency of an unfilled composition is taught in the prior art. Specifically, US—A—3,284,406 to Nelson, which issued on November 8, 1966, and US—A—3,436,366 to Modic, which issued on April 1, 1969, disclose using resinous copolymers containing $R_3SiO_{1/2}$, $R_2ViSiO_{1/2}$ and $SiO_{4/2}$ units for this purpose. In the foregoing formulae, R represents a monovalent hydrocarbon radical free of ethylenic unsaturation and Vi represents a vinyl radical.

The cured materials disclosed in the aforementioned Nelson and Modic patents typically exhibit hardness values of from 35 to 80 on the Shore A durometer scale, which is indicative of relatively highly crosslinked materials. Modic teaches inclusion of a finely divided nonreinforcing filler when transparency of the cured article is not a requirement. The curing agents taught by Modic are liquid polyorganohydrogensiloxanes containing at least two silicon-bonded hydrogen atoms per molecule, while the curing agents disclosed in the aforementioned Nelson patent contain at least three silicon-bonded hydrogen atoms per molecule.

A means for increasing the tear strength of cured polyorganosiloxanes prepared from liquid compositions similar to those disclosed in the aforementioned Modic patent while maintaining the viscosity of the curable composition within the range from 10 to 500 Pa · s is taught in US—A—4,340,709 to Jeram and Smith, which issued on July 20, 1982. In accordance with the disclosure of this patent, a liquid polydiorganosiloxane containing from 0.14 to 2.0 mole percent of vinyl radicals is cured using the combination of a crosslinking agent and a "coupler." The coupler is a linear polyorganosiloxane containing only two silicon-bonded hydrogen atoms, one at each of the two terminal positions of each molecule. The crosslinking agents are defined as "hydride resins having only terminal hydrogen atoms or a linear hydride polysiloxane" containing hydrogen atoms only in the internal portion of each molecule on nonterminal silicon atoms.

Jeram and Smith limit the concentration of difunctional coupler to the range of 4 to 15 parts by weight per 100 parts by weight of the vinyl-containing polydiorganosiloxane. The coupler is further defined as providing a molar concentration of silicon-bonded hydrogen atoms that is from 0.67 to 1.3 times the molar concentration of vinyl radicals present in the curable composition. The cured compositions exemplified by Jeram and Smith exhibit hardness values of from 21 to 43 on the shore A durometer scale after curing for one hour at 100°C. Hardness values in this range are desirable for protective coatings, encapsulating materials and certain types of molded articles, however the cured products disclosed by Jeram and Smith would not be useful for fabricating cured gel type materials which are required to be compressible under relatively low pressure.

The concept of using a difunctional curing agent in combination with a tri- or higher functional curing agent, both of which contain silicon-bonded hydrogen atoms, to improve the tensile properties of cured polyorganosiloxane elastomers is taught in US—A—3,697,473, which issued to Polmanteer et al, on October 10, 1972. The elastomers exemplified in this reference exhibit durometer values of from 11 to 38, measured on the Shore A scale. At least 10% of the available silicon-bonded hydrogen atoms are present in each of the two types of curing agents.

The tensile properties and hardness values reported in the aforementioned Nelson, Modic, Jeram et al. and Polmanteer et al. patents indicate that the cured articles exemplified in this prior art do not exhibit the unique combination of properties required for some applications of polyorganosiloxanes, for example, elastomeric optical waveguides.

Pressure sensitive optical waveguides require cured, noncellular articles in the form of blocks or sheets that are transparent, exhibit minimal light attenuation, and are deformable under relatively low pressure, for example, light to moderate finger pressure, applied on one surface of the article. Suitable polyorganosiloxanes typically exhibit durometer values too low to be measured using the Shore A scale. In addition, the cured article must be sufficiently resilient to resume its original shape almost immediately following release of the pressure which deformed it, and sufficiently tough to resist being punctured and/or torn when this pressure is repeatedly applied over only a fraction of the total area of one surface on the waveguide. If the surface of the waveguide on which deformation occurs is overlayed with a transparent film or membrane, the adhesion along this interface must be sufficient to prevent separation between the two components and resultant void formation. The foregoing combination of properties considered

desirable for elastomeric waveguides have not been found in the prior art pertaining to polyorganosiloxane compositions.

An objective of this invention is to provide liquid polyorganosiloxane compositions that can be rapidly cured at relatively low temperatures to yield readily deformable, resilient, tough elastomeric gels.

It has now been found that the foregoing objective can be achieved using the liquid polyorganosiloxane compositions of this invention, which are obtained by mixing a vinyl terminated polydimethylsiloxane, a resinous organosiloxane copolymer comprising dimethylvinylsiloxy, trimethylsiloxy and $SiO_{4/2}$ groups, a polyorganosiloxane containing at least three silicon-bonded hydrogen atoms per molecule, a substantially linear polydimethylsiloxane containing dimethylhydrogensiloxy terminal groups and a catalyst to promote curing of said composition. The characterizing features of the compositions are the molar concentration of silicon-bonded hydrogen atoms present in the linear polydiorganosiloxane which is at least 1.6 times the molar concentration of vinyl radicals in the curable composition, and the total silicon-bonded hydrogen to vinyl ratio.

This invention relates to a curable, liquid polyorganosiloxane composition consisting essentially of the product obtained by mixing (A) 100 parts by weight of at least one liquid triorganosiloxy endblocked polydimethylsiloxane, said triorganosiloxy radicals being selected from dimethylvinylsiloxy and phenylmethylvinylsiloxy, where said polydimethylsiloxane exhibits a viscosity of from 1.0 to 500 Pa · s at 25°C; (B) from 5 to 25 parts of a benzene-soluble copolymer consisting essentially of units of the formulae $CH_2{=}CH(CH_3)_2SiO_{1/2}$, $(CH_3)_3SiO_{1/2}$ and $SiO_{4/2}$, where the molar ratio of the combination of $CH_2{=}CH(CH_3)_2SiO_{1/2}$ and $(CH_3)_3SiO_{1/2}$ units to $SiO_{4/2}$ units is from 0.7 to 1.2:1 inclusive, and vinyl-containing units constitute from 2 to 8 percent by weight of said copolymer; (C) an organosiloxane of the formula

$$H(CH_3)_2SiO[Si(CH_3)_2O]_xSi(CH_3)_2H,$$

where $x$ is an integer from 0 to 50, in an amount sufficient to provide at least 1.6 silicon-bonded hydrogen atoms per vinyl radical present in said composition; (D) a polyorganosiloxane containing at least three silicon-bonded hydrogen atoms per molecule in an amount sufficient to provide from 5 to 15 mol% of the silicon-bonded hydrogen atoms present in said composition, and (E) an amount of platinum catalyst sufficient to promote curing of said composition, characterized in that the total number of silicon-bonded hydrogen atoms present in (C) and (D) is from 1.8 to 2.9 times the number of vinyl radicals present in said composition. Preferred compositions, when cured, are transparent in the absence of filler and exhibit a compressibility of 2.2 mm under a load of from 14 to 50 g, applied using a 1.6 cm. diameter spherical foot, and a resistance to penetration under a load of at least 400 g. applied using a 1.2 cm. diameter cylindrical foot.

1. The vinyl endblocked polydimethylsiloxane

The triorganosiloxy endblocked polydimethylsiloxane is referred to hereinabove as (A). For the purposes of this invention, the triorganosiloxy group contains a vinyl radical and two methyl radicals bonded to silicon or a vinyl, a phenyl and a methyl radical bonded to silicon. (A) is described herein as a polydimethylsiloxane, however it may contain small amounts of other units, including monomethylsiloxane and other mono- or diorganosiloxane units, which are often formed during synthesis of the polymer, so long as these units do not substantially alter the properties of (A).

(A) can be any triorganosiloxy endblocked polydimethylsiloxane that exhibits a viscosity of from 1 to 500 Pa · s. Polymers of this type are well known and commercially available. To achieve the optimum combination of compressibility, resiliency and toughness that characterize preferred cured products of this invention, the molecular weight distribution of the various polymeric species present in (A) should be within the limits specified in US—A—4,162,243, which issued to C. L. Lee et al. on July 24, 1979. These polydimethylsiloxanes contain at least one polymeric species (1) at a concentration greater than those of the most immediately adjacent polymeric species exhibiting molecular weights that are higher and lower than those of (1). Polymeric species (1) can, therefore, be described as a peak molecular weight (PMW) species, having a molecular weight, as determined by gel permeation chromatography, that is in the range of from 68,000 to 135,000 and corresponds to a maximum on the molecular weight distribution plot.

In addition to containing at least one PMW species as defined hereinabove, preferred embodiments of (A) also exhibit a dispersity index (DI) value greater than 3.8. The DI value takes into account the concentration of all polymeric species present in (A), and is obtained by dividing the weight average molecular weight of a given polymer by its number average molecular weight.

The molecular weight of the lower molecular weight polymeric species present in preferred embodiments of (A) is within the range from 854 to 3146, and the molecular weight of the highest molecular weight polymeric species is in the range from 174,000 to 370,000.

The molecular weight distribution plot for polydimethylsiloxane (A) can exhibit only one maximum or PMW value. Alternatively, the molecular weight distribution in (A) may be such that it contains two or more PMW species which differ to molecular weight and are present at a concentration exceeding that of species having molecular weight values closest to and on either side of the value for any given PMW species. It is preferable that (i) the molecular weight of the PMW species which is present at the highest concentration,

relative to the other PMW species, be within the foregoing range of from 68,000 to 135,000, and (ii) the dispersity index of (A) be greater than 3.8.

To achieve the optimum combination of compressibility, resiliency and puncture resistance in the cured product, (A) is preferably a mixture of at least two liquid triorganosiloxy endblocked polydimethylsiloxanes wherein one contains a PMW species within the range of from 70,000 to 90,000, exhibits a dispersity index of greater than 3.8, and constitutes from 30 to 70% by weight of the mixture. The second polydimethylsiloxane contains a PMW species within the range of from 20,000 to 40,000 and exhibits a dispersity index of about 3.

(A) can also include a third triorganosiloxy endblocked polydimethylsiloxane containing a PMW species within the range of 11,000 to 14,000 and exhibiting a dispersity index of about 2. This species constitutes from 5 to 30% of the weight of (A).

Conventional polymerization methods for preparing triorganosiloxy endblocked polydimethylsiloxanes will not inherently yield products corresponding to preferred embodiments of (A). These embodiments can be obtained as disclosed hereinbefore by blending two or more polydimethylsiloxanes at different molecular weights in the proportions required to achieve the aforementioned PMW species or species, dispersity index and molecular weight distribution.

Another method of preparing preferred embodiments of (A) is described by Lee et al. in US—A—3,445,426 which issued on May 20, 1969 which shows a method of preparing suitable polydimethylsiloxanes. Briefly, the method produces a monodispersed hydroxyl endblocked polydimethylsiloxane which can be reacted with a hexaorganodisilazane, triorganochlorosilane, or triorgano-(N-methylacetamido)silane. Such monodispersed polydimethylsiloxanes can be blended to produce (A). Also disclosed by Lee et al. is a method of making a fluid having two PMW species. In this method, polymerization is started and allowed to proceed for a determined time, then more ingredients are added and the polymerization is allowed to continue to yield an (A) having a major PMW species and a minor PMW species.

Preferably, the triorganosiloxy endblocking group of (A) is a dimethylvinylsiloxy group.

2. The organosiloxane resin

The resinous organosiloxane copolymer (B) contributes to the unique combination of physical properties that distinguishes the cured products of this invention from prior art materials. These copolymers contain units of the formulae $(CH_3)_2(CH_2{=}CH)SiO_{1/2}$, $(CH_3)_3SiO_{1/2}$ and $SiO_{4/2}$. The molar ratio of the combined $(CH_3)_2(CH_2{=}CH)SiO_{1/2}$ and $(CH_3)_3SiO_{1/2}$ units to $SiO_{4/2}$ units is from 0.7:1 to 1.2, inclusive. Vinyl containing units constitute from 2 to 8% by weight of the resin, and the resin preferably contains at least two vinyl radicals per molecule of copolymer. Preferbaly, the ranges for the molar ratio of dimethylvinylsiloxy: trimethylsiloxy: $SiO_{4/2}$ units is 0.08—0.1:0.6—1.1:1.

A precursor of the resinous cooplymers corresponding to ingredient (B) defined hereinbefore, can be prepared as described in US—A—2,676,182, which issued to Daudt and Tyler on April 20, 1954. The copolymers described in this patent contain from 2 to 23 percent by weight of hydroxyl groups, which is considerably above the maximum level of about 0.8 weight percent preferred for precursors of (B). The hydroxyl content of the precursor is conveniently reduced to the desired level by employing a higher concentration of triorganosiloxane capping agent than the concentration range taught in the aforementioned US—A—2,676,182. Briefly, this method comprises reacting under acidic conditions a silica hydrosol with hexamethyldisiloxane or trimethylchlorosilane. To obtain (B), the required amount of silazane, siloxane or silane containing a vinyl and two methyl radicals bonded to silicon is reacted with the resultant product.

The presence of (B) in the curable compositions of this invention is necessary to achieve the properties required in the cured gel. Less than about 5%, based on the weight of (A), will usually not provide the desired resiliency and toughness, while more than about 25% by weight often increases the viscosity of the curable composition to the extent that it cannot be easily processed under conventional conditions of temperature and pressure. In addition, the hardness of the cured gel is increased to the extent that it is not easily deformed by finger pressure.

3. The organohydrogensiloxanes

A characteristic feature of the present polyorganosiloxane compositions is the ratio of the number of silicon-bonded hydrogen atoms present in the linear dimethylhydrogensiloxy terminated polydimethylsiloxane, (C), to the number of vinyl radicals present in the ingredients identified hereinabove as (A) and (B). This ratio is greater than 1.6:1 and preferably from 1.70:1 to 2.50:1.

(C) provides at least 85%, preferably from 89 to 95% of the total number of silicon-bonded hydrogen atoms present in the curable compositions of this invention. This number is from 1.90 to 2.80 per vinyl radical. (C) typically contains an average of from 0 to about 50 dimethylsiloxane units per molecule.

(C) is represented by the formula $H(CH_3)_2SiO[SiO(CH_3)_2]_xSi(CH_3)_2H$ where $x$ is from 0 to 50. Preferably, the average value of $x$ is from 10 to 15.

Dimethylhydrogensiloxy terminated polydimethylsiloxanes useful as (C) are well known, and include, but are not limited to, those disclosed in the aforementioned US—A—3,697,473 to Polmanteer et al. This patent contains a teaching of organosiloxanes containing two terminally bonded hydrogen atoms.

The second of the two types of polyorganosiloxanes containing silicon-bonded hydrogen atoms has at least three silicon-bonded hydrogen atoms per molecule, and is identified hereinabove as ingredient (D). This ingredient exhibits a viscosity of up to 10 Pa · s at 25°C and can contain siloxane units such as $HSiO_{1.5}$, $CH_3HSiO$, and $(CH_3)_2HSiO_{1/2}$ in addition to methylsilsesquioxane, dimethylsiloxane, trimethylsiloxy, and $SiO_{4/2}$ units. Alternatively, ingredient (D) can be a cyclic compound such as

$$\left[(CH_3)_2SiO\right]\left[CH_3HSiO\right]_3$$

Cyclic polyorganosiloxanes contain from 4 up to about 8 siloxane units per molecule.

Organohydrogensiloxanes containing 3 or more silicon-bonded hydrogen atoms per molecule and no more than one hydrogen per silicon atom are well known, as are methods for preparing these siloxanes. Preferred siloxanes are linear polymethylhydrogensiloxanes of the general formula

$$R(CH_3)_2SiO[Si(CH_3)_2O]_a[SiH(CH_3)O]_bSi(CH_3)_2R$$

where R represents a hydrogen atom or a methyl group, *b* is from 3 to 30 and the value of *a* is such that the polymer exhibits a viscosity of up to 10 Pa · s at 25°C. Most preferably, *a* is 3, *b* is 5 and R is a methyl group.

4. The catalyst

The ingredients identified hereinbefore as (A), (B), (C), and (D) will react in the presence of a suitable catalyst to yield an elastomeric gel. A preferred class of catalysts includes the platinum compositions that are known to catalyze the reaction between silicon-bonded hydrogen atoms and olefinic double bonds, particularly silicon-bonded vinyl groups, and that are soluble in (A). A particularly suitable class of platinum-containing catalysts are the complexes prepared from chloroplatinic acid and certain unsaturated organosilicon compounds and described by Willing in US—A—3,419,593, which issued on December 31, 1968 and shows these complexes and their preparation. One preferred catalyst of this type is a reaction product of chloroplatinic acid and sym-divinyltetramethyldisiloxane.

The platinum catalyst (E) can be present in an amount sufficient to provide at least one part by weight of platinum for every one million parts by weight of (A). It is preferred to use sufficient catalyst so that there is present from 5 to 50 parts by weight of platinum for every one million parts by weight of (A). It is to be understood that amounts of platinum greater than 50 parts per million are effective but are unnecessary and uneconomical, especially when the preferred catalyst is used.

Mixtures containing ingredients (A), (B), (C), and (D) with a platinum catalyst may begin to cure immediately on mixing at room temperature. In these instances, it may be desirable to retard the activity of the catalyst at room temperature with a suitable inhibitor if the composition is to be stored before curing. The inhibitor should allow the platinum to effectively catalyze the reaction between (A), (B), (C), and (D) at elevated temperatures.

One suitable type of platinum catalyst inhibitor is described in US—A—3,445,420, which issued on May 20, 1969, to Kookootsedes et al. and shows certain acetylenic inhibitors and their use. A preferred class of acetylenic inhibitors are the acetylenic alcohols, particularly 2-methyl-3-butyn-2-ol.

A second type of platinum catalyst inhibitor is described in US—A—3,989,667, which issued on November 2, 1976, to Lee and Marko, and shows certain olefinic siloxanes, their preparation and their use as platinum catalyst inhibitors.

A preferred type of platinum catalyst inhibitor is a polymethylvinylcyclosiloxane having three to six methylvinylsiloxane units per molecule. This type of inhibitor is different from the ones discussed hereinabove in that it functions by delaying initiation of the curing reaction at ambient temperature, thereby increasing the "pot life" of the composition. Once the curing reaction commences, however, it proceeds at the same rate as if no inhibitor were present. This type of an inhibitor will therefore not impart long-term storage stability to the present compositions.

The optimum concentration of platinum catalyst inhibitor is that which will provide the desired storage stability at ambient temperature without requiring an excessively prolonged time interval to cure the compositions at elevated temperatures. This amount can vary widely and will depend upon the particular inhibitor that is used, the nature and concentration of the platinum-containing catalyst and the nature of the organohydrogensiloxane reactants (C) and (D).

Inhibitor concentrations as low as one mole of inhibitor per mole of platinum will in some instances yield a satisfactory level of storage stability and desirable curing period. In other cases, inhibitor concentrations of up to 10, 50, 100, 500 or more moles per mole of platinum may be needed. The optimum concentration for a particular inhibitor in a given composition can be determined by routine experimentation. Inhibited compositions are typically cured by heating them to a temperature of 70°C or higher.

If transparency is not a requirement, the curable compositions of this invention can also contain conventional additives, including pigments, reinforcing fillers, extending fillers and heat stabilizers.

The curable compositions of this invention can readily be prepared using any conventional method that ensures homogeneous blending of the ingredients. The order of addition of the various ingredients is

not critical if the composition is to be used immediately, however, it has been found preferable to combine ingredients (A), (B) and (E), and thereafter add (C) and (D). This permits the small amount of catalyst (E) to become well dispersed in a mixture of (A) and (B) prior to the beginning of any curing reaction. Suitable two package compositions can be made using such a technique. For example, a convenient two package composition can be prepared by combining part of (A), part of (B), and all of (E) in one package and the remainder of (A) and (B), with all of (C) and (D), in a second package such that equal weight amounts of the contents of package one and package two can be mixed to produce the compositions of this invention. Single package compositions can be prepared by combining (A), (B), (C), (D) and (E) together with a platinum catalyst inhibitor. These inhibited compositions can be stored for extended periods of time under ambient conditions without curing, but will still cure when heated above 70°C, preferably above 100°C to shorten the cure time.

Depending upon the desired end use application, the viscosity of the present curable compositions can vary from 0.1 up to 100 Pa · s at 25°C. To facilitate processing in injection operations and minimize entrapment of air bubbles during mixing, viscosities of from 0.5 to 10 Pa · s are preferred.

The unique combination of compressibility, resiliency and toughness exhibited by preferred cured products prepared using the compositions of this invention are desirable in a variety of end use applications including diaphragms, as the filler material in mammary prostheses, as injection seals for inflatable medical devices and as potting and encapsulating materials. In the absence of the optional additives disclosed hereinabove, the present compositions are transparent in the cured state.

As disclosed hereinbefore, transparent, elastomeric gels prepared using the curable compositions of this invention are particularly useful as pressure sensitive optical waveguides. In this application, a light beam directed through a waveguide formed from a transparent cured gel of this invention can be interrupted, deflected or varied in wavelength in response to deformation of the waveguide. The deformation can be induced by applying an electrical potential across the cross section of the waveguide or by mechanical means, such as finger pressure. The modulation of light beams in response to deformation of an elastomeric waveguide induced by a varying electrical potential is disclosed in United States US—A—4,128,299, which issued on December 5, 1978.

The combination of transparency, compressibility, resiliency, and toughness exhibited by preferred cured elastomeric gels of this invention make these gels particularly useful as touch-sensitive optical waveguide switches. In this application, interruption or deflection of a light beam being transmitted along the waveguide is accomplished by applying sufficient finger pressure to deform one surface of the waveguide.

The present cured gels are sufficiently conpressible that they can be deformed under relatively light finger pressure to the extent required to function effectively as an optical switch, and sufficiently tough that the gel will not tear or fracture following repeated deformations. Tears, fractures and other structural defects are undesirable because they can refract or deflect light passing through a waveguide, making it unsuitable for further use.

If the waveguide is to be employed as a touch-sensitive optical waveguide switch, the surface characteristics of the cured polyorganosiloxane gel that forms the waveguide or the environment in which the waveguide will be used may be such that it is desirable to cover at least the contact surface of the waveguide with a flexible membrane formed from a synthetic organic polymer. In those areas where deformation of the waveguide occurs, it is vital that the adhesion between the cured polyorganosiloxane and the overlying membrane be sufficient to avoid separation of the membrane and the waveguide when the deforming pressure is released. A separation between membrane and waveguide will result in voids that may drastically alter the optical transmittance of the waveguide to the extent that it will no longer function as originally intended. The preferred gels of this invention exhibit excellent adhesion to many types of synthetic organic polymers.

The following examples disclose preferred embodiments of the present compositions and should not be construed as limiting the scope of the invention as defined in the accompanying claims. All parts and percentages are by weight unless otherwise specified.

Example 1

Sample preparation

Curable compositions were prepared by combining all of the ingredients described hereinafter, with the exception of the platinum-containing catalyst, and mixing until a homogeneous composition was obtained. The platinum catalyst was then blended into the composition, following which the composition was deaired for 20 minutes under a pressure of 1 cm. of mercury. Equal portions of each of the 16 compositions were transferred into individual containers and cured at 65.5°C for 20 minutes. After cooling to ambient temperature, the samples were evaluated for compressibility and fracture resistance as described hereinafter.

Ingredient $A^1$ was a dimethylvinylsiloxy endblocked polydimethylsiloxane exhibiting a peak molecular weight species, determined by gel permeation chromatography, of 75,099, a dispersity index of 7.44 and a viscosity of about 30 Pa · s at 25°C.

Ingredient $A^2$ was a dimethylvinylsiloxy endblocked polydimethylsiloxane exhibiting a peak molecular

weight species, determined by gel permeation chromatography, of 12,554, a dispersity index of 2.1 and a viscosity of about 0.4 Pa · s at 25°C.

The third ingredient was a 35 weight percent solution of a resinous organosiloxane copolymer (B) in a dimethylvinylsiloxy terminated polydimethylsiloxane ($A^3$) exhibiting a peak molecular weight species, determined by gel permeation chromatography of about 31,000, a dispersity index of about 3 and a viscosity of about 2.1 Pa · s at 25°C. The organosiloxane copolymer contained repeating units of the formulae $(CH_2{=}CH)(CH_3)_2SiO_{1/2}$, $(CH_3)_3SiO_{1/2}$ and $SiO_{4/2}$ in a molar ratio of 0.09:0.8:1.0 and was prepared as described in US—A—2,676,182. The copolymer contained 6.3% by weight of dimethylvinylsiloxy groups.

Ingredient (C) was a dimethylhydrogensiloxy endblocked polydimethylsiloxane containing an average of 13.3 dimethylsiloxane units per molecule.

In addition to the foregoing ingredients, each composition contained 0.42 part of a trimethylsiloxy endblocked dimethylsiloxane/methylhydrogensiloxane copolymer containing an average of 62.5 mole percent methylhydrogensiloxane units and an average of 0.8 weight percent silicon-bonded hydrogen atoms, 0.17 part of cyclic polymethylvinylsiloxanes and 0.12 part of a chloroplatinic acid complex of divinyltetramethyldisiloxane diluted with a liquid dimethylvinylsiloxy endblocked polydimethylsiloxane to achieve a platinum content of 0.7 weight percent.

The amounts of ingredients (A) through (C) present in each of the sixteen compositions prepared, and the molar ratio of silicon-bonded hydrogen atoms to silicon-bonded vinyl radicals in each composition are recorded in the following Table 1. Table 1 also reports the weight ratio of ingredient (B) to all of the polydimethylsiloxanes [ingredients ($A^1$), ($A^2$), and ($A^3$)] present in the curable composition. The compressibility and penetration resistance of the cured gels are reported in Table 2. All of the cured gels were transparent.

Compressibility test

Compressibility was measured by placing a cured gel sample measuring 6.4 cm. in diameter and about 1.6 cm. in thickness on the weighing platform of a laboratory balance. A vertically adjustable spherical foot measuring 1.59 cm. in diameter was lowered until it exerted a load of 0.3 g. on the sample, as determined by the weight reading of the balance. The foot was then lowered a distance of 0.23 mm and the weight reading on the balance was recorded as the load required to compress the gel sample. These readings appear in Table 2.

Penetration resistance test

The gel samples for this test were prepared by placing 54 g. of a curable composition in a 60 cc capacity cylindrical container and curing the sample as described in the foregoing section of this example. The test was performed using a laboratory model penetrometer manufactured by Precision Scientific Corporation and equipped with a 1.2 cm.-diameter cylindrical foot. The height of the foot was adjusted such that it rested on the surface of the sample without placing any detectable load on the surface of the sample. Weights were then placed on top of the foot in 50 or 100 g. increments until the foot penetrated the surface of the sample. The total amount of weight present when penetration occurred is recorded in Table 2 together with the highest weight at which no penetration was observed.

TABLE 1

| Sample number | Ingredient (parts) | | | | | Molar ratio | Parts B per |
|---|---|---|---|---|---|---|---|
| | $A^1$ | $A^2$ | B | $A^3$ | C | $SiH/SiCH=CH_2$ | 100 parts $(A^1+A^2+A^3)$ |
| Invention | | | | | | | |
| 1 | 48.8 | 6.5 | 10.1 | 18.9 | 15.0 | 2.61 | 13.6 |
| 2 | 28.0 | 27.3 | 10.1 | 18.9 | 15.0 | 1.93 | 13.6 |
| 3 | 38.4 | 6.5 | 13.8 | 25.6 | 15.0 | 2.14 | 19.6 |
| 4 | 38.4 | 16.9 | 10.1 | 18.9 | 15.0 | 2.17 | 13.6 |
| 5 | 30.6 | 9.1 | 14.7 | 27.3 | 17.6 | 2.31 | 21.9 |
| 6 | 41.0 | 9.1 | 11.1 | 20.5 | 17.6 | 2.71 | 15.7 |
| 7 | 30.6 | 19.5 | 11.1 | 20.5 | 17.6 | 2.35 | 15.7 |
| 8 | 35.0 | 8.5 | 12.9 | 24.1 | 19.0 | 2.69 | 19.1 |
| Comparative Samples | | | | | | | |
| 9** | 28.0 | 6.5 | 17.4 | 32.4 | 15.0 | 1.85 | 26.0 |
| 10* | 28.0 | 6.5 | 10.1 | 18.9 | 35.8 | 5.99 | 18.9 |
| 11** | 28.0 | 16.9 | 13.8 | 25.6 | 15.0 | 1.89 | 19.6 |
| 12* | 28.0 | 6.5 | 13.8 | 25.6 | 25.4 | 3.54 | 23.0 |
| 13* | 38.4 | 6.5 | 10.1 | 18.9 | 25.4 | 4.18 | 15.8 |
| 14* | 28.0 | 16.9 | 10.1 | 18.9 | 25.4 | 3.62 | 15.8 |
| 15** | 33.2 | 17.7 | 12.2 | 22.2 | 20.2 | 2.86 | 16.7 |
| 16* | 30.6 | 9.1 | 11.1 | 20.5 | 28.0 | 4.27 | 18.4 |

*Samples 10, 12, 13, 14 and 16 did not cure and were not evaluated further.
** Samples 9, 11 and 15 are within the scope of the present invention but did not exhibit the physical properties characteristic of preferred embodiments.

TABLE 2

| Sample number | Compressibility (g/0.23 mm compression) | Penetration resistance (g. prior to and following penetration) |
|---|---|---|
| Invention | | |
| 1 | 14.67 | 300—350 |
| 2 | 32.40 | 750—800 |
| 3 | 49.00 | 1300—1350 |
| 4 | 24.60 | 700—750 |
| 5 | 34.00 | 1150—1200 |
| 6 | 15.50 | 400—450 |
| 7 | 14.50 | 400—450 |
| 8 | 18.16 | 400—450 |
| Comparative samples* | | |
| 9 | 248.00 | 1550 |
| 11 | 120.00 | 1550 |
| 15 | 4.46 | 100—200 |

*Refer to ** in Table 1.

Samples 9 and 11 were above the limits for compressibility and penetration resistance defined hereinbefore for preferred embodiments of the present invention. Sample 15 was considerably softer than preferred gels prepared using the compositions of this invention. Samples 9, 11 and 15 are all within the broadest scope of this invention.

The data in Tables 1 and 2 demonstrate the wide variation in compressibility and penetration resistance that can be obtained using compositions within the scope of the present invention by varying the molar ratio of silicon-bonded hydrogen atoms to vinyl radicals and/or the relative concentration of resinous copolymer (B). Samples 1, 6, 7 and 8 represent particularly preferred embodiments of this invention, and would be suitable for the fabrication of pressure sensitive optical waveguide devices described hereinbefore.

Example 2

This example demonstrates the resiliency exhibited by a preferred cured composition of this invention. The composition identified as number 8 in the preceding Example 1 was cured in a circular aluminum weighing dish to form a sample measuring 6.4 cm. in diameter and about 1.6 cm. in thickness. The cured sample was covered with a circular piece of 0.4 mm.-thick film of a polyurethane that was approximately equal in diameter to that of the sample.

The covered sample was placed on a substantially horizontal surface directly below a load cell that was attached to the movable beam of a Scott model CRE-500 laboratory tester. The load cell was equipped with a vertically oriented 0.16 cm.-diameter spherical foot. The electrical output of the load cell was connected to an X—Y recorder that plotted the loading on the cell as a function of distance travelled by the movable beam.

To ensure that the foot was contacting the test sample, the movable beam of the tester was lowered until the recorder indicated a loading of 5 grams on the cell. This value is referred to herein as $h_1$. The movable beam was then lowered at a rate of 25 cm. per minute to a height of $h_2$, at which the recorder indicated a loading of 25 grams. The beam was then raised to the initial $h_1$ value at a rate of 50 cm. per minute. The rate at which the loading on the load cell returned to the initial 5 g. value indicated that the sample recovered from 95 to 100% of the height lost during compression, equal to $h_1$–$h_2$, following removal within two seconds of the compressive force exerted by the foot.

The foregoing resiliency test was repeated three times to ensure reproducibility.

## Claims

1. A curable liquid polyorganosiloxane composition consisting essentially of the product obtained by mixing

(A) 100 parts by weight of at least one liquid triorganosiloxy endblocked polydimethylsiloxane, said triorganosiloxy radicals being selected from dimethylvinylsiloxy and methylphenylvinylsiloxy, where said polydimethylsiloxane exhibits a viscosity of from 1.0 to 500 Pa · s at 25°C;

(B) from 5 to 25 parts of a benzene-soluble copolymer consisting essentially of units of the formulae $CH_2{=}CH(CH_3)_2SiO_{1/2}$, $(CH_3)_3SiO_{1/2}$ and $SiO_{4/2}$, where the molar ratio of the combination of $CH_2{=}CH(CH_3)_2SiO_{1/2}$ and $(CH_3)_3SiO_{1/2}$ units to $SiO_{4/2}$ units is from 0.7:1 to 1.2:1, inclusive, and $CH_2{=}CH(CH_3)_2SiO_2$ units constitute from 2 to 8 percent by weight of said copolymer;

(C) an organosiloxane of the formula

$$H(CH_3)_2SiO[Si(CH_3)_2O]_xSi(CH_3)_2H,$$

where $x$ is an integer from 0 to 50, in an amount sufficient to provide at least 1.6 silicon-bonded hydrogen atoms per vinyl radical present in said composition;

(D) a polyorganosiloxane containing at least three silicon-bonded hydrogen atoms per molecule in an amount sufficient to provide from 5 to 15 percent of the silicon-bonded hydrogen atoms present in (C) and (D); and

(E) an amount of platinum catalyst sufficient to promote curing of said composition,

characterized in that the total number of silicon-bonded hydrogen atoms present in (C) and (D) is from 1.9 to 2.8 times the number of vinyl radicals present in said composition.

2. A composition according to claim 1 wherein said composition, when cured, is transparent and exhibits the following physical properties;

a compressibility of 2.2 mm. under a load of from 14 to 50 g. applied by a 1.6 cm. diameter spherical foot; and

a resistance to penetration under a load of at least 400 g. applied by a 1.2 cm. diameter cylindrical foot.

3. A composition according to claim 1 where the average value of $x$ in (C) is from 10 to 15.

4. A composition according to claim 1 where the amount of organosiloxane (C) is sufficient to provide from 1.70 to 2.50 silicon-bonded hydrogen atoms per vinyl radical present in (A) and (B).

5. A composition according to claim 4 where the silicon-bonded hydrogen atoms present in (C) represent from 89 to 95% of the silicon-bonded hydrogen atoms present in said composition.

6. A composition according to claim 1 where polyorganosiloxane (D) contains at least 5 silicon-bonded hydrogen atoms per molecule.

7. A composition according to claim 1 where polyorganosiloxane (D) is represented by the formula

$$R(CH_3)_2SiO[Si(CH_3)_2O]_a[Si(H)(CH_3)O]_bSi(CH_3)_2R$$

where R is hydrogen or $CH_3$, $b$ is an integer from 3 to 20, inclusive, and the value of $a$ is such that the viscosity of (D) does not exceed 10 Pa · s at 25°C.

8. A composition according to claim 7 where $a$ is from 0 to 10, inclusive, $b$ is from 3 to 10, inclusive, and R is methyl.

9. A pressure sensitive optical waveguide device where at least one beam of light passing through said waveguide is interrupted or deflected by deformation of said waveguide, and where said waveguide consists essentially of a gel obtained by curing the curable liquid composition of claim 2.

10. The optical waveguide device of claim 9 where at least one surface of said waveguide whereon said deformation occurs is overlayed with an adherent, transparent, flexible membrane of a synthetic organic polymer.

## Patentansprüche

1. Hartbare flussige Polyorganosiloxanzusammensetzung bestehend im wesentlichen aus dem durch Mischen erhaltenen Produkt von

(A) 100 Gew.-Teilen mindestens eines flüssigen triorganosiloxy-endblockierten Polydimethylsiloxans, wobei die Triorganosiloxygruppen ausgewählt sind aus dimethylvinylsiloxy und Methylphenylsiloxy, wobei das Polydimethylsiloxan bei 25°C eine Viskosität von 1,0 bis 500 Pa · s aufweist;

(B) von 5 bis 25 Gew.-Teilen eines benzolloslichen Copolymeren im wesentlichen bestehend aus Einheiten der Formeln $CH_2{=}CH(CH_3)_2SiO_{1/2}$, $(CH_3)_3SiO_{1/2}$ und $SiO_{4/2}$, in denen das molare Verhältnis der Kombination von $CH_2{=}CH(CH_3)_2SiO_{1/2}$- und $(CH_3)_3SiO_{1/2}$-Einheiten zu $SiO_{4/2}$-Einheiten von 0,7:1 bis 1,2:1 einschlieblich beträgt und die $CH_2{=}CH(CH_3)_2SiO_{1/2}$-Einheiten von 2 bis 8 Gew.-% des Copolymeren ausmachen;

(C) einem Organosiloxan der Formel

$$H(CH_3)_2SiO[Si(CH_3)_2O]_xSi(CH_3)_2H,$$

in der x eine ganze Zahl von 0 bis 50 ist, in einer Menge, um mindestens 1,6 an Silizium gebundene Wasserstoffatome pro in der Zusammensetzung vorhandener Vinylgruppe zu schaffen;

(D) einem Polyorganosiloxan enthaltend mindestens 3 an Silizium gebundene Wasserstoffatome pro Molekül in einer ausreichenden Menge, um 5 bis 15% der in (C) und (D) vorhandenen an Silizium gebundenen Wasserstoffatome zu schaffen und

(E) einer zum Beschleunigen der Hartung der Zusammensetzung ausreichenden Menge Platinkatalysator, dadurch gekennzeichnet, daß die Gesamtzahl der in (C) und (D) vorhandenen, an Silizium gebundenen wasserstoffatome das 1,9 bis 2,8 fache der Zahl der in der Zusammensetzung vorhandenen Vinylgruppec beträgt.

2. Zusammensetzung nach Anspruch 1, dadurch gekennzeichnet, daß die gehärtete Zusammensetzung transparent ist und folgende physikalische Eigenschaften aufweist: eine Kompressibilität von 2,2 mm unter einer Belastung von 15 bis 50 g, aufgebracht durch einen Kugelstempel mit 1,6 cm Durchmesser, und einen Eindringwiderstand gegenuber einem zylindrischen Stempel mit 1,2 cm Durchmesser bei einer Belastung von mindestens 400 g.

3. Zusammensetzung nach Anspruch 1 dadurch gekennzeichnet, daß der Mittelwert von *x* in (C) von 10 bis 15 beträgt.

4. Zusammensetzung nach Anspruch 1, dadurch gekennzeichnet, daß die Menge an Organosiloxan (C) ausreichend ist, um von 1,7 bis 2,5 an Silizium gebundene wässerstoffatome pro in (A) und (B) vorhandener Vinylgruppe zu schaffen.

5. Zusammensetzung nach Anspruch 4, dadurch gekennzeichnet, daß die in (C) vorhandenen, an Silizium gebundenen Wasserstoffatome von 89 bis 95% der in der Zusammensetzung vorhandenen, an Silizium gebundenen wasserstoffatome sind.

6. Zusammensetzung nach Anspruch 1, dadurch gekennzeichnet, daß das Polyorganosiloxan (D) mindestens 5 an Silizium gebundene Wasserstoffatome pro Molekule enthält.

7. Zusammensetzung nach Anspruch 1, dadurch gekennzeichnet, daß das Polyorganosiloxan (D) die Formel aufweist

$$R(CH_3)_2SiO[Si(CH_3)_2O]_a[Si(H)(CH_3)O]_bSi(CH_3)_2R,$$

in der R Wasserstoff oder $CH_3$ ist, *b* eine ganze Zahl von 3 bis 20 einschließlich ist und der Wert von *a* derart ist, daß die Viskosität von (D) bei 25°C 10 Pa · s nicht überschreitet.

8. Zusammensetzung nach Anspruch 7, dadurch gekennzeichnet, daß *a* von 0 bis 10 einschließlich beträgt, *b* von 3 bis 10 einschließlich ist und R Methyl ist.

9. Druckempfindliche optische Wellenleiteinrichtung, bei der mindestens ein durch den Wellenleiter gelangender Lichtstrahl durch Deformation des Wellenleiters unterbrochen oder abgelenkt wird und der Wellenleiter im wesentlichen aus einem Gel, das durch Härten der härtbaren Zusammensetzung von Anspruch 2 erhalten wurde, besteht.

10. Optische Wellenleiteinrichtung nach Anspruch 9, dadurch gekennzeichnet, daß mindestens eine Oberfläche des Wellenleiters, auf der die Deformation erfolgt, mit einer haftenden, transparenten, flexiblen Membran aus einem synthetischen organischen Polymer bedeckt ist.

**Revendications**

1. Une composition de polyorganosiloxane, liquide, durcissable, essentiellement constituée du produit obtenu en mélangeant

(A) 100 parties en poids d'au moins un polydiméthylsiloxane liquide bloqué aux extrémités par des radicaux triorganosiloxy, lesdits radicaux triorganosiloxy étant choisis entre les radicaux diméthylvinylsiloxy et méthylphénylvinylsiloxy, ledit polydiméthylsiloxane présentant une viscosité de 1,0 à 500 Pa · s à 25°C;

(B) 5 à 25 parties d'un copolymère soluble dans le benzène essentiellement constitué de motifs des formules $CH_2{=}CH(CH_3)_2SiO_{1/2}$, $(CH_3)_3SiO_{1/2}$ et $SiO_{4/2}$, le rapport molaire de l'ensemble des motifs $CH_2{=}CH(CH_3)_2SiO_{1/2}$ et $(CH_3)_3SiO_{1/2}$ aux motifs $SiO_{4/2}$ étant de 0,7:1 à 1,2:1 inclusivement, et les motifs $CH_2{=}CH(CH_3)_2SiO_{1/2}$ constituant 2 à 8% en poids dudit copolymère;

(C) un organosiloxane de la formule $H(CH_3)_2SiO[Si(CH_3)_2O]_xSi(CH_3)_2H$, où *x* est un nombre entier de 0 à 50, en une quantité suffisante pour fournir au moins 1,6 atome d'hydrogène lié au silicium par radical vinyle présent dans ladite composition;

(D) un polyorganosiloxane contenant au moins trois atomes d'hydrogène liés au silicium par molécule, en une quantité suffisante pour fournir 5 à 15 pour cent des atomes d'hydrogène liés au silicium présents dans (C) et (D); et

(E) un catalyseur au platine en une quantité suffisante pour activer le durcissement de ladite composition,

caractérisée en ce que le nombre total d'atomes d'hydrogène liés au silicium présents dans (C) et (D) est de 1,9 à 2,8 fois le nombre de radicaux vinyle présents dans ladite composition.

2. Une composition selon la revendication 1, ladite composition, une fois durcie, étant transparente et présentant les propriétés physiques suivantes;

une compressibilité de 2,2 mm sous une charge de 14 à 50 g appliquée par un poinçon sphérique de 1,6 cm de diamètre; et

une résistance à la pénétration sous une charge d'au moins 400 g appliquée par un poinçon cylindrique de 1,2 om de diamètre.

3. Une composition selon la revendication 1, dans laquelle la valeur moyenne de *x* dans (C) est de 10 à 15.

4. Une composition selon la revendication 1, dans laquelle la quantité d'organosiloxane (C) est suffisante pour fournir 1,70 à 2,50 atomes d'hydrogène liés au silicium par radical vinyle présent dans (A) et (B).

5. Une composition selon la revendication 4, dans laquelle les atomes d'hydrogène liés au silicium présents dans (C) représentent 89 à 95% des atomes d'hydrogène liés au silicium présents dans ladite composition.

6. Une composition selon la revendication 1, dans laquelle le polyorganosiloxane (D) contient au moins 5 atomes d'hydrogène liés au silicium par molécule.

7. Une composition selon la revendication 1, dans laquelle le polyorganosiloxane (D) est représenté par la formule

$$R(CH_3)_2SiO[Si(CH_3)_2O]_a[Si(H)(CH_3)O]_bSi(CH_3)_2R$$

où R est l'hydrogène ou $CH_3$, *b* est un nombre entier de 3 à 20 inclusivement, et la valeur de *a* est telle que la viscosité de (D) ne dépasse pas 10 Pa · s à 25°C.

8. Une composition selon la revendication 7, dans laquelle *a* est 0 à 10 inclusivement, *b* est 3 à 10 inclusivement, et R est le radical méthyle.

9. Un dispositif à guide d'ondes optique sensible à la pression, dans lequel au moins un faisceau de lumière traversant ledit guide d'ondes est interrompu ou dévié par déformation dudit guide d'ondes, et dans lequel ledit guide d'onde est essentiellement constitué d'un gel obtenu en durcissant la composition liquide durcissable de la revendication 2.

10. Le dispositif à guide d'ondes optique de la revendication 9, dans lequel au moins une surface dudit guide d'ondes sur laquelle s'exerce ladite déformation est recouverte d'une membrane souple, transparente, adhérente, constituée d'un polymère organique synthétique.